# FASCICULE DE BREVET EUROPEEN

(11) **EP 1 560 745 B1**
(45) Date de publication et mention de la délivrance du brevet: **23.08.2006**
(21) Numéro de dépôt: 03715062.0
(22) Date de dépôt: 28.01.2003
(51) Int. Cl.: B62D 65/00, B65G 17/18, B65G 49/04

(54) **INSTALLATION DE TRANSPORT D'OBJETS EN SERIE DANS UNE CHAINE DE MANUTENTION, EN PARTICULIER POUR L'INDUSTRIE AUTOMOBILE**
PENDELFÖRDERER FÜR DIE KRAFTFAHRZEUGINDUSTRIE
INSTALLATION FOR SEQUENTIALLY TRANSPORTING OBJECTS IN A GOODS HANDLING LINE, IN PARTICULAR FOR THE AUTOMOTIVE INDUSTRY

(30) Priorité: 23.10.2002 US 420657 P
(43) Date de publication de la demande: 10.08.2005
(73) Titulaire: Dürr Systems GmbH, 70435 Stuttgart (DE)
(72) Inventeur: FAGE, Claude, F-46340 Salviac (FR)
(74) Mandataire: Thibon-Littaye, Annick
(86) Numéro de dépôt international: PCT/FR2003/000270
(87) Numéro de publication internationale: WO 2004/041628

(56) Documents cités:
- EP-A- 1 104 737
- WO-A-00/78594
- DE-A- 4 425 522
- FR-A- 2 756 815
- GB-A- 2 373 768
- US-A- 5 718 320

## Description

La présente invention concerne la conception et la réalisation des installations de transport d'objets en série dans une chaîne de manutention comportant au moins un poste de traitement desdits objets individuellement. Elle vise d'une manière générale à améliorer les conditions de fonctionnement des sites industriels robotisés, notamment en autorisant des cadences de fabrication élevées grâce à de meilleures performances des installations de transport en vitesse et en flexibilité, tout en permettant une grande robustesse assurant la sécurité de fonctionnement pour des investissements d'infrastructure et des frais d'entretien réduits.

La notion de poste de traitement doit être comprise ici de manière extensive. Il peut s'agir, par exemple, de soumettre les objets transportés à des traitements de surface, à des opérations de peinture, de les plonger dans des bains chimiques ou dans des bains de traitement électrochimique comme il est classique dans les lignes de peinture de caisses d'automobiles, tout autant que d'opérations tendant à chauffer ou refroidir les objets transportés, ou d'opérations d'assemblage les complétant par des pièces diverses.

L'invention porte plus précisément sur une installation dans laquelle lesdits objets sont véhiculés suspendus par des pendules à deux convoyeurs symétriques qui parcourent l'installation sous la commande de moyens d'entraînement synchronisés pour prendre en charge lesdits objets dans un poste de chargement et les transporter individuellement jusqu'à un poste de déchargement, en passant par au moins un poste de traitement desdits objets. D'une manière générale, en considérant une chaîne de production industrielle, comportant un ou plusieurs postes de traitement en ligne, on peut admettre que le poste dit de chargement se situe à l'entrée de l'installation tandis que le poste de déchargement se situe en sortie de l'installation.

Des installations de ce genre sont courantes, en particulier, dans les usines de construction d'automobiles. voir à cet effet les documents FR-A-2 756 815 ou WO-A-00 78 594 qui peuvent également être prises à base du préambule de la revendication indépendante 1. Celles-ci ont pour particularité que les objets transportés, quand il s'agit notamment des caisses de véhicules automobiles, sont à la fois lourds et encombrants à l'unité. Sans doute au moins en partie pour cette raison, les convoyeurs utilisés en pratique dans ce genre d'installations sont actuellement des convoyeurs à chaîne, dans lesquels les pendules qui portent les caisses constituant les objets en cours de traitement sont fixés articulés aux maillons d'une chaîne entraînée en translation sur elle-même le long de l'installation, suivant un trajet qui est strictement défini par des rails guides dont le rôle essentiel est de supporter le poids de l'ensemble des éléments mobiles. A cet effet, les axes d'articulation des maillons successifs de la chaîne sont terminés par des galets qui roulent emprisonnés dans les rails guides pendant son déplacement.

Suivant les besoins de chaque application particulière, les pendules de suspension des objets, plus spécialement des caisses de véhicules automobiles en exemple typique des applications de l'invention, peuvent être réalisés de diverses manières. On distingue ainsi, notamment, les réalisations où chaque caisse est suspendue par deux pendules, se disposant l'un à l'avant et l'autre à l'arrière dans la direction de transport et chacun étant formé d'une seule pièce grâce à une barre transversale rendant solidaires deux bras verticaux s'accrochant respectivement aux chaînes des deux convoyeurs, et les réalisations où les bras des pendules ne sont plus reliés en un ensemble rigide et chaque caisse est suspendue aux deux convoyeurs par quatre bras pendulaires indépendants.

Les secondes ont sur les premières l'avantage de mieux se prêter à la réalisation d'installations de construction relativement simple et néanmoins robuste et de faciliter des implantations d'encombrement relativement réduit. Par exemple, il est commode d'éviter de prévoir des dispositifs d'embrayage et débrayage des bras porteurs au niveau des postes de chargement et de déchargement situés aux extrémités de la ligne de traitement, en laissant ces bras montés à demeure sur les convoyeurs sur tout le parcours des chaînes suivant une boucle fermée revenant, sur le côté de la ligne de traitement, du poste de déchargement des caisses déjà traitées au poste de chargement des caisses à traiter. Le plus souvent, chaque caisse repose sur un support habituellement appelé "luge", au motif qu'il est essentiellement constitué par deux longerons parallèles, appelés "skis", ou "skids", qui servent à l'entraînement des caisses à travers d'autres unités de fabrication, équipées de convoyeurs au sol, et à leur transfert d'un convoyeur à un autre, qu'il s'agisse de convoyeurs au sol ou de convoyeurs aériens comme ceux considérés ici.

Par ailleurs, les installations à convoyeurs aériens du type considéré dans le cadre de la présente invention sont particulièrement appréciées pour assurer le transport des caisses de véhicules automobiles suivant des circuits impliquant des tronçons en dénivellation, quand notamment les caisses doivent être plongées dans des bains de traitement en cuve comme on en rencontre dans les lignes de peinture par cataphorèse. Or la mise en oeuvre de l'invention s'est révélée particulièrement avantageuse dans ce genre de situations, du fait que les charges en mouvement ont tendance à se trouver déséquilibrées et à exercer des efforts exagérés sur les chaînes d'entraînement.

Dans le but de répondre mieux que par le passé aux besoins de la pratique industrielle, l'invention prévoit de s'affranchir des chaînes d'entraînement des réalisations actuelles et des problèmes qu'elles posent, en assurant l'entraînement des pendules de suspension des objets à transporter par des câbles qui, dans chaque convoyeur, combinent le rôle de moyens tracteurs à celui de moyens porteurs des charges transportées, en étant maintenus tendus sur des roues de guidage de manière à définir un circuit de convoyage prédéterminé.

D'une manière plus particulière, l'invention a donc pour objet une installation de transport d'objets en série dans une chaîne de manutention, dans laquelle lesdits objets sont véhiculés suspendus par des pendules à deux convoyeurs symétriques qui parcourent l'installation sous la commande de moyens d'entraînement synchronisés pour prendre en charge lesdits objets dans un poste de chargement et les transporter individuellement jusqu'à un poste de déchargement, en passant par au moins un poste de traitement desdits objets, caractérisée en ce que, dans chacun desdits convoyeurs, lesdits pendules sont accrochés en des positions fixes réparties le long d'un câble qui est mû par lesdits moyens d'entraînement tandis qu'il est maintenu tendu sur des roues de guidage définissant un circuit de convoyage prédéterminé, et en ce que les charges ainsi suspendues audit câble par l'intermédiaire des pendules sont exclusivement portées par ledit câble entre lesdites roues de guidage.

On comprend que de la sorte, ledit câble constitue des moyens à la fois tracteurs et porteurs pour lesdits objets, et que sur les tronçons du trajet suivi situés entre les roues de guidage, il est libre de contribuer à assurer, voire d'assurer à lui seul, l'équilibrage des pendules et des charges à la verticale, par un effet de rappel élastique en torsion du câble. Il doit être admis qu'ici et dans la suite de l'exposé de l'invention, quand on parle de roues de guidage en général, il peut s'agir aussi bien de roues individuelles distantes les unes des autres que d'ensemble de roues jouant un rôle équivalents en assurant un contact de guidage sans frottement avec le câble. Dans le cas où les roues ou les groupes de roues sont régulièrement répartis à des intervalles égaux le long du chemin du câble, il est avantageux de prévoir que l'écart entre deux ensembles de guidage successifs couvre une distance différente du pas de répartition des pendules, ou plus généralement de l'écart entre deux pendules supportant une même charge. Ainsi, quand un pendule de suspension d'une charge déterminée à un câble déterminé passe sur une roue de guidage, l'autre pendule associé à la même charge et au même câble est nécessairement dans une zone du circuit où le câble est libre de tout guidage.

Cette capacité d'équilibrage, qui vient se substituer en tout ou partie au montage librement articulé en direction transversale des installations antérieurement connues, est tout particulièrement appréciable dans les installations où le trajet suivi par les objets à traiter comporte des dénivellations, ce qui est notamment le cas, pour les usines de fabrication automobile, dans les lignes de peinture des caisses de véhicules automobiles par phosphatation ou dans des lignes où il leur est appliqué un traitement de surface par cataphorèse, puisque les caisses doivent être plongées dans une cuve contenant un bain de traitement avant de passer dans une cabine de séchage.

Dans de telle installations impliquant un trajet à dénivellations, l'invention apporte divers avantages qui se traduisent en des caractéristiques complémentaires. En particulier, la souplesse du câble porteur tracteur permet des courbures très fortes, d'où des trajets en dénivellation relativement courts pour passer d'un niveau de traitement à un autre et une réduction globale de la longueur de l'installation. Il est alors souhaitable que le câble porteur tracteur soit libre de tout guidage dans son brin courant sur le tronçon en pente passant d'un niveau à l'autre, dès lors qu'il est suffisamment tendu pour présenter une pente restant toujours dans le même sens. On profite mieux ainsi des effets de rappel élastique en équilibrage latéral des charges à leur passage dans la cuve qui sont liés à la souplesse des câbles.

Les câbles porteurs tracteurs utilisés conformément à la présente invention ont aussi l'intérêt de faciliter la réalisation d'installations d'encombrement réduit dans le sens transversal, dans la mesure où la même souplesse des câbles permet de monter les bras des pendules en porte-à-faux, pour rejoindre un point d'accrochage à une luge de réception d'une caisse d'automobile situé sous cette caisse, en contournant cette dernière. Les réalisations de ce type sont dites à luges étroites, par distinction avec le cas des luges présentant des saillies pour la préhension par de bras pendulaires qui dépassent latéralement de l'encombrement de l'objet véhiculé, afin que les bras soient pendants verticalement.

D'autre part, on comprend aisément que les réductions d'encombrement résultant de l'invention vont de pair avec une réduction des coûts de construction et des frais d'entretien et avec des besoins moindres en ventilation, chauffage, etc.

Par ailleurs, s'affranchir des chaînes d'entraînement des installations classiques et des rails porteurs continus a pour corollaire une réduction considérable des besoins de graissage, ainsi qu'une amélioration notable de la stabilité de fonctionnement dans le temps, d'où une meilleure sécurité pour des frais d'entretien réduits. En pratique, les problèmes qui résultaient des phénomènes d'allongement des lignes de convoyage par usure des articulations entre maillons n'existent plus, et il n'est plus nécessaire de compenser périodiquement un allongement différentiel entre, les deux lignes. De plus, là encore, la souplesse naturelle des câbles limite les conséquences néfastes d'un tel allongement différentiel. Au total, cela facilite la synchronisation des moyens moteurs entraînant les câbles en déplacement sur eux-mêmes, telle qu'elle est nécessaire, surtout pour maintenir les points d'accrochage des deux bras d'un même pendule sur la même transversale aux lignes de convoyage, et accessoirement pour maintenir une vitesse d'entraînement uniforme.

Suivant d'autres caractéristiques de l'invention, la mise en oeuvre de l'installation implique un étage de réglage préalable à son fonctionnement normal, consistant essentiellement à procéder à une mise en tension des câbles, par traction de chacun à l'une des extrémités de l'installation, pour les amener à leur maximum d'allongement avant de fixer dessus les différents bras de pendules, en des positions en correspondance mutuelle (entre les deux lignes de convoyage) pour la suspension des objets à transporter.

En conséquence, l'installation suivant l'invention comporte avantageusement des moyens de mise en tension appropriés pour chacun des câbles qu'elle comporte. De tels moyens de mise en tension d'un câble sont en eux-mêmes classiques.

Conformément à des modes de réalisation préférés de l'installation suivant l'invention, chacun des câbles en déplacement décrit une boucle fermée comprenant une partie de circuit de convoyage dite active, ou brin aller, allant du poste de chargement des objets au poste de déchargement, en passant par le ou les postes de traitement, et une partie de circuit inactive, ou brin de retour, ramenant les bras pendulaires seuls, à vide, du poste de déchargement au poste de chargement pour y charger un nouvel objet à traiter. Les moyens de mise en tension de chaque câble peuvent alors avantageusement comporter une roue de renvoi du câble montée mobile sous l'action d'un vérin de manière à l'éloigner du reste de l'installation et allonger ainsi la boucle parcourue par le câble. Le cas échéant, cette roue de renvoi peut également assurer le rôle de roue motrice en prise sur le câble pour assurer son entraînement en boucle fermée. Suivant les besoins de chaque application particulière, chaque tel vérin peut être monté à demeure pour continuer à exercer son effet tenseur quand l'installation est en fonctionnement, ou être démonté une fois le câbles allongé, après avoir verrouillé en position fixe la roue de renvoi par laquelle s'exerçait la traction.

Dans ses modes de mise en oeuvre préférés, tels qu'ils peuvent être particulièrement adaptés notamment aux besoins de l'industrie automobile, l'invention prévoit de constituer les moyens tracteurs porteurs des objets, sur chacune des lignes de convoyage, par deux câbles couplés, entre lesquels se situent les points d'accrochage des bras pendulaires. Le couplage entre les deux câbles de chaque convoyeur est avantageusement assuré, au niveau de chaque bras pendulaire, par une pince d'accrochage de ce dernier qui est en prise sur l'un et l'autre des câbles. La solution à deux câbles couplés a l'avantage de répartir les efforts s'exerçant sur les câbles, de permettre des sections de câbles plus faibles favorisant leur souplesse exploitable suivant l'invention, d'éviter un balancement latéral des bras qui serait perturbateur pour le bon fonctionnement de l'installation.

De préférence, que les moyens tracteurs porteurs soient à câble unique ou à deux câbles couplés, les bras sont montés libres de pivoter en rotation autour d'un axe transversal, plus particulièrement perpendiculaire à la ligne de convoyage, donc d'avant en arrière dans la direction de convoyage. Cette liberté d'orientation dans le plan longitudinal vertical est utile pour plusieurs raisons. Tout d'abord, elle est en général nécessaire, du moins dans un intervalle angulaire faible autour de la verticale, pour les opérations de prise en charge et de libération des charges, notamment des luges sur lesquelles reposent couramment les caisses d'automobiles, qui demandent de verrouiller ou déverrouiller respectivement les extrémités inférieures des bras de pendules sur des traverses des luges équipées de manetons coopérants. D'autre part, elle est souhaitable, voire nécessaire, sur une amplitude plus importante, pour permettre aux pendules de s'équilibrer à la verticale dans les tronçons du circuit de convoyage qui sont en pente dans le cas de lignes de traitement à dénivellations.

Elle a enfin l'avantage de permettre, dans des modes de réalisation préférés de l'installation suivant l'invention, de rabattre les bras de pendules dans une position inclinée vers le câble ou les câbles auxquels ils sont accrochés quand ils circulent à vide, en particulier quand ils reviennent du poste de déchargement au poste de chargement sur le parcours d'un convoyeur en boucle fermée. Cette possibilité est utile notamment dans tous les cas où il apparaît souhaitable d'implanter les différents éléments de l'installation dans un espace minimal, en particulier dans un espace fermé comme c'est en général le cas dans les sites industriels, d'autant plus lorsque l'on peut y trouver des vapeurs chimiques.

Suivant encore une autre caractéristique de l'invention liée à l'organisation de la circulation des bras pendulaires, les câbles des convoyeurs décrivent des boucles fermées restant dans un même plan vertical, avec de préférence un trajet en retour des bras se plaçant au-dessus des postes de traitement des objets transportés, en particulier quand il s'agit de postes de traitement en cuves imposant des dénivellations. En effet, il est souhaitable que sur tout leur trajet, les câbles travaillent dans les zones en courbe dans le même plan que quand ils passent sur les roues motrices ou les roues de renvoi ou roues de guidage sur lesquelles ils sont tendus.

D'autres caractéristiques de la présente invention concernent le mode d'entraînement des convoyeurs, principalement dans leur synchronisation, qui est avantageusement assurée au moins en vitesse de défilement des câbles, le cas échéant aussi en position sur leurs parcours respectifs quand il est nécessaire de rattraper un décalage tel que celui qui peut parfois intervenir par glissement d'un câble sur la roue motrice qui l'entraîne. Les bras pendulaires peuvent avantageusement constituer les repères de position servant à cette régulation.

Encore d'autres caractéristiques et avantages de l'invention apparaîtront à la lecture de la description suivante de formes de réalisation préférées des différentes parties essentielles d'une installation selon l'invention, considérée appliquée au transport de caisses de carrosseries dans une chaîne de manutention de l'industrie automobile. Cette description est faite en référence aux dessins qu'elle comporte, dans lesquels :
- la figure 1 montre de manière schématique, en vue de dessus, la structure générale d'une première forme de réalisation de l'installation selon l'invention ;
- la figure 2 représente schématiquement, en vue latérale, une installation similaire dans laquelle les caisses subissent un traitement en cuve dans un bain de cataphorèse ;
- la figure 3 illustre schématiquement, pour une installation suivant la figure 1 en vue latérale, une caisse en cours de transport telle que suspendue par la luge qui la porte à des câbles de convoyeurs monocâbles ;
- la figure 4 montre de manière schématique l'installation au niveau de la même caisse, vue de derrière suivant la direction A de la figure 3, et elle fait apparaître la ligne de coupe BB utilisée pour la figure 3 ;
- la figure 5 est l'homologue de la figure 4 pour une installation à deux convoyeurs bi-câbles, dans laquelle en outre chaque câble parcourt une boucle fermée se situant dans un même plan vertical ;
- la figure 6 est une vue latérale schématique de la même installation suivant la ligne de coupe CC de la figure 5, qui fait ressortir la position des bras pendulaires au passage de l'extrémité de chargement ;
- la figure 7 représente de manière plus détaillée une forme de construction d'un système de tension des câbles, supposé situé à l'extrémité de l'installation correspondant au poste de déchargement ;
- les figures 8 et 9 sont respectivement des vues de côté et de face d'un bras pendulaire le montrant dans ses relations mécaniques avec le câble porteur tracteur d'un convoyeur monocâble tel que celui des figures 3 et 4, en se plaçant plus particulièrement dans le cas d'une installation à luges étroites ;
- les figures 10 et 11 sont homologues des précédentes pour un convoyeur bi-câble répondant mieux aux caractéristiques de l'invention dans ses formes de mise en oeuvre préférées, en se plaçant par contre dans le cas d'une installation à luges larges.

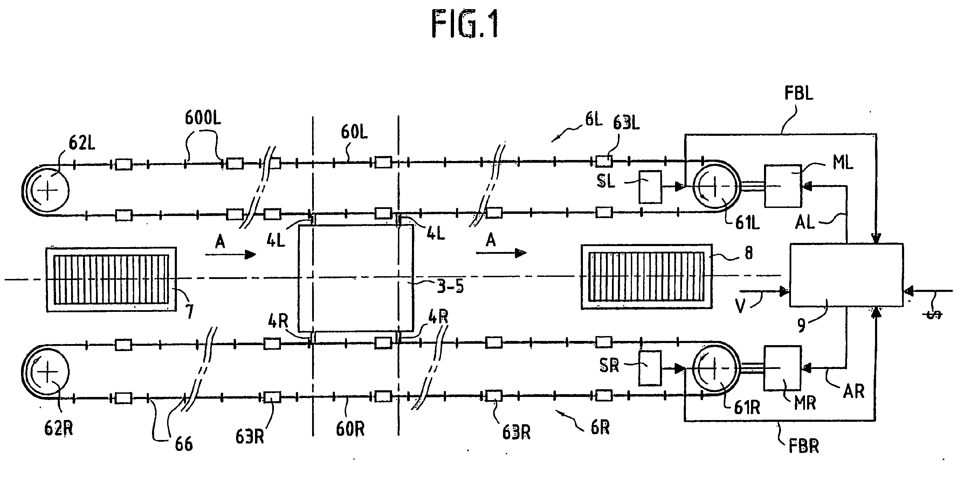

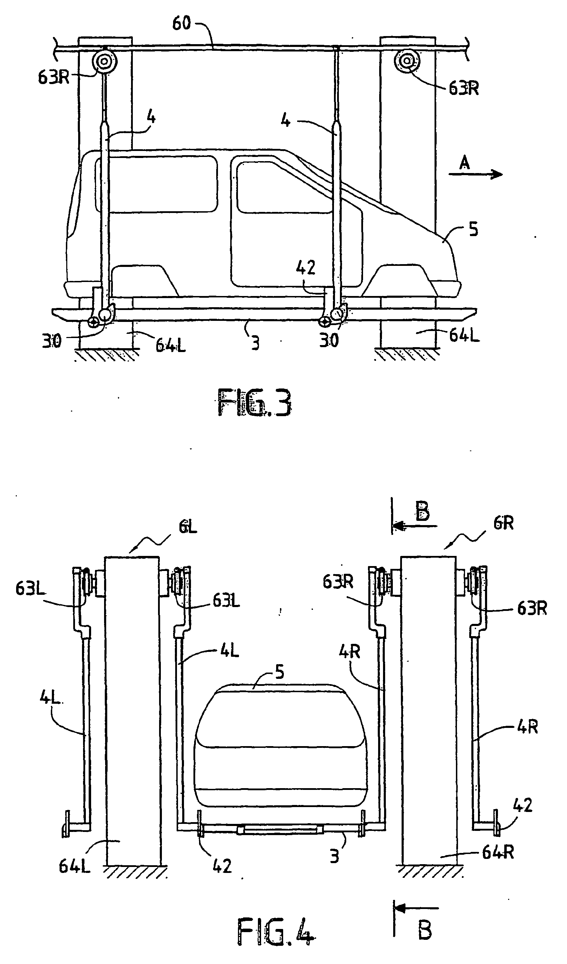

Dans les différentes formes de mise en oeuvre de l'invention ici décrites, on considère une installation destinée à l'industrie automobile, s'agissant plus précisément d'une chaîne de manutention dans laquelle les objets individuellement véhiculés suspendus à deux convoyeurs parallèles sont des caisses de carrosseries 5 reposant chacune sur le support qu'il est convenu d'appeler une luge 3, sur laquelle viennent s'accrocher quatre bras de suspension indépendants 4 (figure 3), également référencés 4R à droite et 4L à gauche (figure 1) quand on se place dans la direction de déplacement illustrée par la flèche A sur les figures. Cette solution est en général plus avantageuse, notamment pour une exploitation optimale de la souplesse des câbles utilisés comme moyens tracteurs également porteurs des charges, que celle qui consiste à suspendre les caisses, avec ou sans luge support, par deux pendules rigides, reliant chacun deux bras solidaires relevant respectivement des deux convoyeurs parallèles, l'un des couples de bras formant les pendules se situant à l'avant et l'autre à l'arrière de chaque caisse véhiculée.

Suivant une première forme de réalisation de l'installation suivant l'invention, illustrée par les figures 1, 3 et 4, les deux convoyeurs 6 équipant l'installation, référencés respectivement 6R et 6L, sont chacun à câble porteur tracteur unique 60 (ou 60L et 60R respectivement), et d'autre part, chaque câble est entraîné en translation sur lui-même pour décrire une boucle qui se referme dans un plan horizontal à chaque extrémité de l'installation. Dans leurs brins aller, sur la portion de leurs circuits où ils sont actifs en transport des charges, les deux câbles sont latéralement espacés dans la partie médiane de l'installation. Au retour, les bras pendulaires, restant accrochés aux câbles en leurs positions respectives, circulent à vide le long de portions de circuit retour dites passives, qui se situent de part et d'autre de la partie médiane de l'installation, comme c'était le cas pour les convoyeurs à chaîne de l'installation décrite dans le brevet européen EP 1 104 737. On notera que cette disposition impose une suspension par des pendules avant et arrière faits chacun de deux bras pendulaires indépendants.

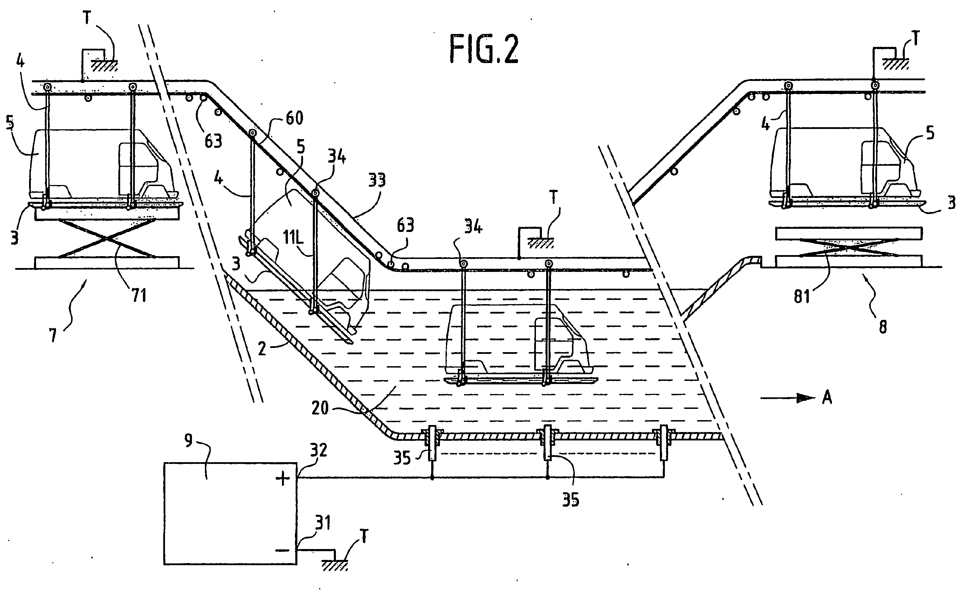

C'est ainsi que sur la figure 1, on voit une charge 3-5 (caisse 5 reposant sur la luge 3) en une position intermédiaire le long de l'installation, entre un poste de chargement 7 à l'entrée de l'installation et un poste de déchargement 8 à sa sortie. A ces deux extrémités de l'installation, chacune des charges successives est, respectivement, soit prélevée par quatre bras pendulaires de l'installation à partir d'un convoyeur au sol l'ayant amenée jusqu'à un système ascenseur-descenseur 71 (figure 2), soit déposée sur un système ascenseur-descenseur symétrique 81 par lequel elle passe sur un autre convoyeur au sol une fois terminé son traitement dans l'installation de l'invention.

En partie basse, à son extrémité distale par rapport au câble auquel il est fixé, chaque bras pendulaire 4 (ou 4R, 4L) est constitué, d'une manière en elle-même classique, et décrite par exemple dans le brevet européen déjà cité, de manière à former un crochet de préhension pour un maneton coopérant 30 prévu sur une luge 3 (figure 3). Sous un écartement égal au pas séparant deux bras successifs de chaque convoyeur, chaque luge 3 comporte deux manetons 30 de chaque côté, respectivement sur les deux skis longitudinaux de la luge, aux extrémités de traverses reliant les deux skis en un ensemble rigide. Les crochets 42 (figure 3) viennent en prise avec les manetons 30 d'une luge 3 qui se trouve soulevée au poste de chargement 7 par une table élévatrice 71, et ils en sont libérés sur le système 81 du poste de déchargement. Les bras pendulaires 4, une fois ainsi décrochés de la luge 3, reviennent à vide vers l'entrée de l'installation, pour prendre en charge une nouvelle luge avec sa caisse.

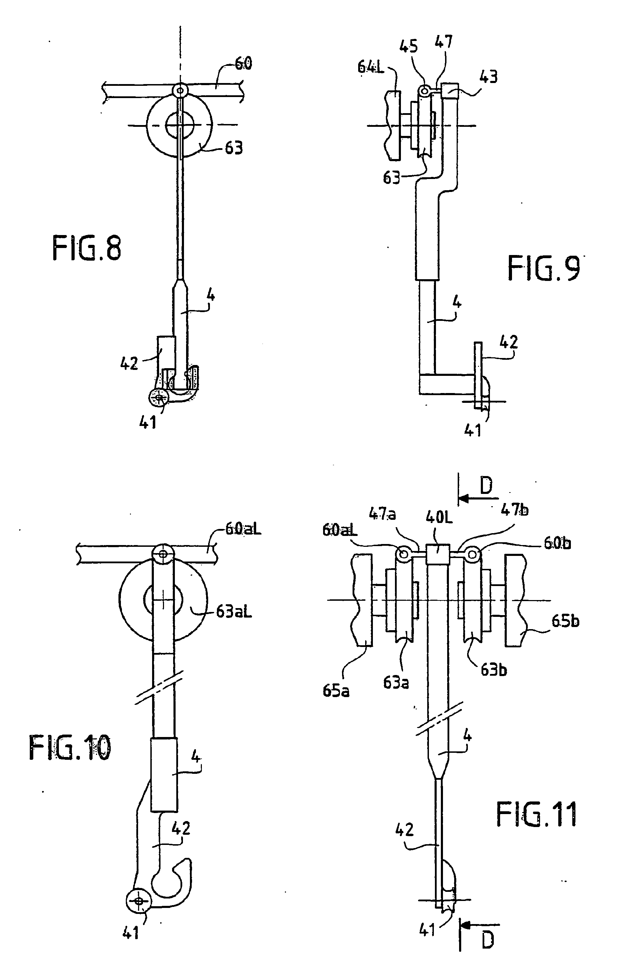

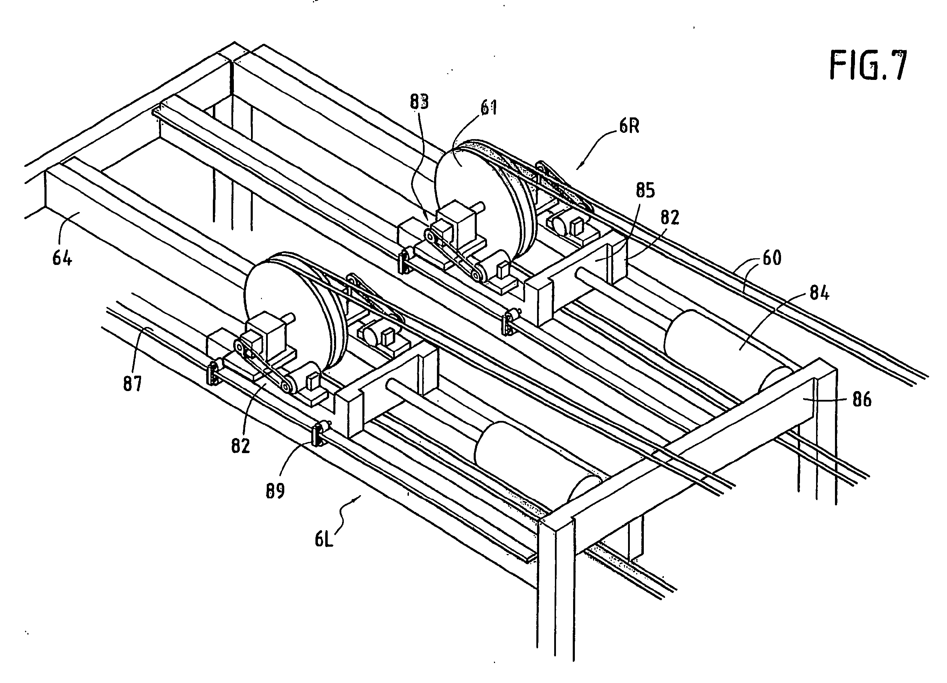

En partie haute, en son extrémité proximale, chaque bras pendulaire 4 est assemblé au câble 60 par un système de pivot 43 et pince 45 (figure 9) qui le maintient en une position restant en permanence fixe sur le câble en déplacement tout en lui laissant toute liberté de pivoter dans le plan vertical du convoyeur. Le convoyeur illustré sur la figure 9 étant à une seul câble (version monocâble d'une installation suivant l'invention), on a prévu dans ce cas une suspension en porte-à-faux des luges, les bras 4 étant conformés coudés et en courbe vers l'extérieur de la caisse véhiculée pour rejoindre une luge dite étroite. Cependant, contrairement à ce que montrent les figures en se plaçant dans le cas d'une installation d'encombrement minimal en hauteur, grâce à une disposition horizontale des circuits des convoyeurs, il est en général plus avantageux de construire la charpente fixe supportant les différents éléments de l'installation de manière que les points d'accrochage des bras en haut au câble et en bas à la luge se placent dans un même plan vertical.

Les câbles 60 sont constitués de manière en soi classique, par une pluralité de torons enroulés en vrille hélicoïdale autour d'une âme centrale, chaque toron étant avantageusement lui-même formé de plusieurs torons de fils métalliques assemblés en vrille. Préalablement à la mise en route de l'installation en fonctionnement normal pour le transport des charges, les câbles demandent à être soumis à une procédure de mise en tension progressive au cours de laquelle ils s'allongent. Une fois cette procédure terminée, ils restent tendus suivant un circuit en boucle fermée définitif, pratiquement sans plus s'allonger.

Le circuit de convoyage se ferme en boucle en passant autour d'une roue motrice 61L ou 61R qui tire le câble le long de sa portion active en transport des charges à partir de l'extrémité de sortie de l'installation, au niveau du poste de déchargement 8, et autour d'une roue de renvoi 62L ou 62R située à l'extrémité opposée, au niveau du poste de chargement 7. La roue motrice 61L, 61R, de type poulie, entraîne le câble 60 correspondant par contact non glissant dans son réa. Elle agit en traction sur le câble pour l'entraîner suivant le circuit de convoyage à travers le ou les postes de traitement que comporte l'installation. Elle est entraînée en rotation par un motoréducteur, ML ou MR respectivement. La roue de renvoi 62L, 62R, également de type poulie, est montée en rotation libre sur la charpente fixe.

Entre les deux extrémités de la boucle, le trajet de chaque câble 60 est défini par des roues de guidage 63, réparties le long de l'installation. De telles roues de guidage se trouvent en particulier là où des dénivellations doivent être imposées comme c'est le cas pour les traitements s'effectuant en cuve comme sur la figure 2. On observe, notamment des vues latérales des figures 2 et 3, que la distance entre deux roues de guidage successives (ou entre deux groupes équivalents de roues de guidage comme illustré par la figure 2) est supérieure au pas de répartition des bras pendulaires le long des câbles.

La figure 1 illustre schématiquement la présence de motoréducteurs ML et MR qui entraînent respectivement les roues motrices 61L et. 61R. Ils sont alimentés indépendamment l'un de l'autre en puissance électrique sous asservissement en vitesse et en position. En effet, un circuit de commande 9 délivre aux motoréducteurs ML et MR, respectivement, des tensions alternatives d'alimentation AL et AR qui sont déterminées de manière à assurer un entraînement synchrone des câbles, avec asservissement de vitesse et de position, entre les deux convoyeurs 6L et 6R. L'un des convoyeurs est commandé par le circuit 9 en tant que convoyeur maître et l'autre convoyeur est commandé en tant que convoyeur esclave, asservi en vitesse et en position au convoyeur maître. Le convoyeur maître est commandé de façon à assurer une vitesse de déplacement du câble conforme à une valeur de consigne de vitesse V.

Les boucles de contre-réaction de l'asservissement sur les commandes des motoréducteurs ML et MR sont réalisées respectivement à l'aide de capteurs SL et SR, constitués par exemple de capteurs optiques associés aux convoyeurs 6L et 6R, respectivement. Ces capteurs SL et SR fournissent au circuit 9 des signaux de contre-réaction FBL et FBR, en correspondance avec la détection de repères de position passant devant eux. Les repères de position peuvent être constitués par des marques 66 (figure 1) réalisées sur les câbles eux-mêmes et réparties à des intervalles réguliers identiques sur leur longueur. Selon une variante préférée, la fonction des repères de position des câbles est remplie par les bras pendulaires 4L et 4R, ou mieux par les organes qui assurent la liaison entre chaque bras pendulaire et le câble auquel il est accroché (système à pince 45).

La commande asservie fournie par le circuit 9 est déterminée pour assurer l'alignement des pendules 4L et 4R entre les deux côtés de l'installation sur la même transversale. Elle permet de rattraper un glissement différentiel éventuel des câbles sur leurs roues motrices, de sorte que l'on conserve toujours une relation de position correcte entre les bras pendulaires et les luges.

Comme déjà indiqué, les roues de guidage 63L et 63R sont montées rotatives par leurs axes respectifs en des positions fixes de l'installation, ce que l'on a illustré sur les figures 3 et 4 par un montage sur des parties supérieures de montants verticaux, 64L et 64R. Dans une installation qui, dans ce cas, est supposée de type linéaire rectiligne, les montants 64L et 64R sont alignés respectivement suivant les deux axes longitudinaux des convoyeurs 6L et 6R, parallèlement à la direction de déplacement A, avec un écartement latéral prédéterminé entre eux, en correspondance avec la largeur des charges à transporter.

En considérant la portion de circuit aller allant du poste de chargement au poste de déchargement, on observe que les roues homologues d'un couple 63L-63R sont montées sur des faces opposées en vis-à-vis des montants 64L et 64R, du côté interne de ceux-ci, et que leurs axes sont situés dans un même plan horizontal commun aux deux convoyeurs 6L et 6R. On observe aussi que les mêmes montants servent symétriquement, chacun du côté externe, à supporter des roues de guidage 65a ou 65b, qui sont dévolues au guidage du même câble, respectivement gauche ou droite, sur son brin de retour des bras à vide. Une variante importante du montage ici illustré consisterait à inverser la position entre roues de guidage et bras pendulaires, en montant les axes de rotation des roues à l'intérieur de potences prolongeant transversalement le montant support ou une poutre équivalente.

Les figures 8 et 9 montrent plus précisément, toujours pour une installation à convoyeurs mono-câbles, les relations mécaniques existant entre une roue de guidage 63, le câble correspondant 60 (celui du convoyeur de gauche 6L en l'occurrence) et un bras pendulaire 4, ce dernier étant représenté au moment où il passe sur la roue de guidage 63. Bien entendu, ces figures et leur description seraient symétriquement identiques pour les organes correspondants de l'installation considérés non plus sur le convoyeur de gauche, mais sur celui du côté droit de l'installation.

On observe que la roue de guidage 63 comporte une gorge de réa pour recevoir le câble 60 en évitant qu'il ne se déporte latéralement par rapport à son chemin normal. Elle est montée en rotation libre sur un axe horizontal, lié en position fixe sur le montant 64L correspondant. Le bras pendulaire 4 est, quant à lui, monté libre en rotation sur un axe d'articulation matérialisé par une tige 47 tourillonnant dans une bague pivot 43 et prolongée par une pince 45 qui est fermement serrée sur le câble, de telle sorte que l'axe d'articulation du bras est ainsi fixé solidaire du câble. L'axe d'articulation est orienté perpendiculairement au câble et dans le plan horizontal défini par les câbles parallèles des deux convoyeurs. En d'autres termes, l'assemblage du bras sur le câble est assuré de manière à autoriser en permanence son oscillation d'avant en arrière (et vice-versa), dans le plan normalement vertical de son déplacement tel que défini par le circuit de convoyage.

Par rapport aux installations traditionnelles, qui ne faisaient pas appel à des câbles de traction ayant un effet porteur des charges transportées, l'installation suivant l'invention implique des bras pendulaires 4 de conception plus simple, du fait notamment de la réduction du nombre de degrés de liberté dans le montage entre chaque bras pendulaire et le câble tracteur correspondant. En conformité avec l'invention, on se contente de préférence de l'articulation décrite ci-dessus, en préférant tirer profit de l'élasticité des câbles, et notamment de leur effet de rappel en torsion.

Une autre forme de réalisation préférée de l'installation de transport d'objets selon l'invention est choisie pour la ligne de traitement illustrée par la figure 2, comportant une étape où les caisses 5 sur leurs luges 3 doivent être plongées dans un bain d'électrolyte contenu dans une cuve 2. Dans ce cas, il est en effet plus avantageux d'organiser les circuits des convoyeurs de manière que le trajet de chaque câble soit entièrement compris dans un plan vertical. De la sorte, tous les tronçons courbes du trajet du câble autour de roues de guidage (en y incluant les roues motrices et les roues de renvoi) se situent dans ce plan, ce qui est favorable à la durée de vie du câble.

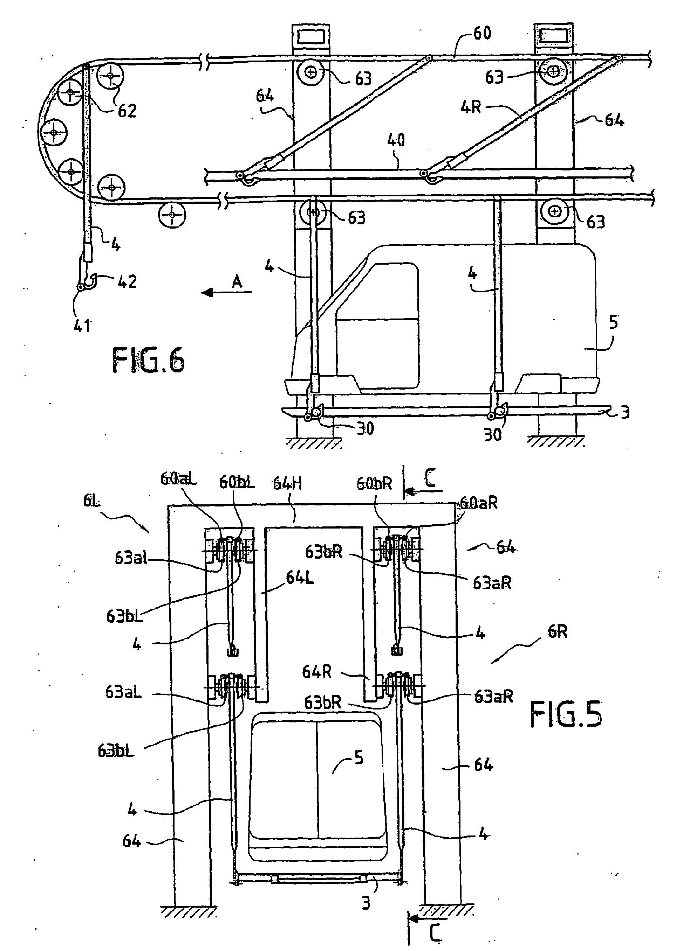

Les figures 5 et 6 ont aussi l'intérêt d'illustrer cette solution de convoyeurs en plan vertical que le circuit en son brin aller comporte des dénivellations ou non. Une telle conception répond à une contrainte d'encombrement minimal en largeur. Par ailleurs, l'installation est ici représentée dans une version équipée de luges larges, sur lesquelles les bras de suspension s'accrochent à l'aplomb des câbles de chaque côté.

Une autre amélioration, au moins aussi importante, apportée conformément à l'invention dans cette seconde forme de mise en oeuvre préférée, réside dans le fait que chaque convoyeur est du type dit bi-câble. Dans chaque convoyeur, les deux câbles sont entraînés en synchronisme le long du circuit de convoyage, pour suivre des trajets rigoureusement parallèles, et chaque bras pendulaire est monté pendant entre les deux, en une position fixe sur les deux câbles. Les deux câbles sont ainsi couplés par l'intermédiaire des dispositifs d'assemblage fixant l'axe d'articulation des bras pendulaires sur les câbles.

Dans l'installation à deux convoyeurs chacun bi-câble considérée ici, on peut prévoir que les quatre câbles soient entraînés en synchronisme et parfaitement positionnés entre eux, de manière à soulager les efforts pouvant s'exercer sur les dispositifs d'assemblage entre câbles et bras pendulaires. On utilise alors le même système de commande avec asservissement au moins en vitesse, et de préférence aussi en position, que celui qui a été décrit précédemment pour l'installation à deux convoyeurs monocâbles, sauf que le circuit de commande est adapté pour commander les moteurs respectifs. Comme précédemment aussi, les bras pendulaires, au niveau de leur attachement aux câbles, sont avantageusement utilisés pour constituer des repères de position se répétant régulièrement sur toute la longueur de chaque circuit. En variante, la synchronisation est assurée en vitesse de déplacement des câbles pour les quatre câbles, et le rattrapage éventuel en position longitudinale est assuré entre les deux convoyeurs seulement, en se fiant pour les deux câbles d'un même convoyeur sur le fait qu'ils sont couplés par l'intermédiaire des axes d'articulation des bras pendulaires.

La figure 5, en particulier, illustre comment peuvent se concrétiser les circuits des câbles tendus pour les deux convoyeurs aériens symétriques 6L et 6R. Le convoyeur 6L comprend essentiellement deux câbles porteurs tracteurs, 60aL et 60bL, entraînés en déplacement sur eux-mêmes respectivement sur des parcours parallèles qui sont chacun définis par une pluralité de roues de guidage 63aL, ou 63bL respectivement. Le convoyeur 6R comprend essentiellement, de manière symétrique, deux câbles porteurs tracteurs 60aR, 60bR, tendus sur un parcours défini pour chacun par une pluralité de roues de guidage 63aR, 63bR. Les câbles 60aL et 60bL décrivent ainsi respectivement deux boucles en regard suivant le circuit de convoyage du convoyeur de gauche, et les câbles 60aR et 60bR décrivent respectivement deux boucles en regard suivant le circuit en boucle fermée du convoyeur de droite. Les deux circuits, donc les quatre parcours en boucle fermée, se situent dans des plans verticaux parallèles, et ils présentent des formes identiques en chaque point à même niveau horizontal.

La charpente fixe supportant, par leurs axes respectifs, les différentes roues de guidage (référencées 63 sur la figure 6, ou 63aL, 63bL, 63aR, 63bR sur la figure 5) est illustrée sous la forme de portiques verticaux 64 comprenant essentiellement chacun deux montants latéraux réunis par une poutre haute horizontale 64H et complétés par deux montants intermédiaires 64'L et 64'R. C'est dans l'espace ménagé entre chaque montant latéral et le montant intermédiaire en vis-à-vis, que sont montées les roues de guidage des câbles. L'intervalle laissé libre entre deux roues se faisant face, relevant respectivement des deux câbles d'un même convoyeur, est suffisant pour qu'un bras pendulaire entraîné par les deux câbles couplés passe librement pendant entre elles, sans choc ni frottement. Cet intervalle est en pratique choisi suffisant pour accepter aussi les débattements latéraux que peut autoriser la souplesse naturelle des câbles tendus quand l'installation est en fonctionnement.

Le trajet de retour des bras pendulaires 4 est représenté partiellement à la figure 6 pour les bras pendulaires du convoyeur de droite de la figure 5. On y observe que les bras 4 reviennent vers l'extrémité de chargement en position rabattue sur l'horizontale, donc en repli vers le haut. Un rail de guidage 40 est installé afin d'amener et de maintenir les bras dans cette position quand ils se déplacent à vide dans la portion inactive des boucles de transport, le long du brin de retour se situant, comme représenté, en partie supérieure, au-dessus du brin aller, dans le même plan vertical. On notera en plus qu'il peut être avantageux de raccourcir le circuit en sa partie de retour des bras à vide, en prévoyant là un trajet horizontal sensiblement rectiligne pour revenir du poste de déchargement au poste de chargement, même dans le cas d'un trajet aller à dénivellations comme celui de la figure 2. Par ailleurs, les roues de guidage peuvent y être sensiblement plus éloignées, sans avoir à craindre que les efforts en tension des câbles soient insuffisants pour éviter qu'ils prennent une flèche qui pourrait être gênante.

La figure 6 illustre également une variante de réalisation de l'installation suivant l'invention où la roue de renvoi faisant passer un câble du trajet aller au trajet retour est en fait constituée par un ensemble de plusieurs roues 62, guidant la courbure du câble sur 180 degrés au niveau de l'extrémité de l'installation où se situe le poste de chargement. Utiliser ainsi plusieurs roues de plus petite taille plutôt qu'une seule tend à répartir les efforts et à réduire l'encombrement et les coûts, en plus de faciliter des courbures moins serrées.

On notera enfin, de manière accessoire, que sur la figure 3 les crochets 42 étaient ouverts vers l'avant, alors que sur la figure 6 ils sont ouverts vers l'arrière, de sorte qu'ils viennent en prise avec les manetons 30 des luges en se plaçant devant eux.

Les figures 10 et 11 montrent plus précisément, pour l'un des deux convoyeurs de l'installation suivant le mode de réalisation préféré des convoyeurs à double câble, les relations mécaniques existant entre les roues 63a et 63b d'une paire de roues de guidage, les câbles couplés correspondants 60a et 60b et un bras pendulaire 4, représenté au moment où il passe entre les roues de guidage. Les roues de guidage des câbles présentent des gorges de réa recevant le câble tendu correspondant pour l'empêcher de s'écarter latéralement de son trajet, sans toutefois freiner son déplacement longitudinal sur lui-même. Elles sont montées en rotation libre sur elles-mêmes, autour de leurs axes respectifs, sur des poutres fixes de l'installation, 65a et 65b. Comme on l'a déjà indiqué, un écartement suffisant est prévu entre les roues 63a et 63b en regard, de façon à autoriser le passage des bras pendulaires 4, librement pendant entre elles.

Par ailleurs, on voit sur les figures 10 et 11, comme sur les figures 8 et 9, un galet 41, qui est prévu en bout de chaque bras pendulaire, sur le crochet 42. Il est placé pour rouler sur le rail 40 de la figure 6 afin de retenir le bras 4 en position rabattue.

Quant au système assurant l'assemblage pivotant des bras sur les câbles ainsi que le couplage des deux câbles d'un même convoyeur, il apparaît plus en détail sur la figure 11, où l'on voit un bras 4 pendant entre deux roues 63a et 63b, libres en rotation sur des éléments de charpente fixe 65a-65b. En son extrémité supérieure, le bras 4 se termine par une pièce d'articulation illustrée par une bague 40L, dans laquelle tourillonne une broche et qui est retenu latéralement par des couronnes de montage. La bague 40L. forme une cage de palier de roulement d'axe horizontal perpendiculaire à la ligne de transport et centré dans le plan des câbles couplés. De part et d'autre de la bague, la broche rotative se prolonge par deux pattes opposées, 47a et 47b respectivement. Au bout de chacune d'elles se trouve la pince en prise sur le câble correspondant. Chaque pince est, en pratique formée de deux mâchoires, l'une au-dessus de l'autre, qui sont fixées serrées contre le câble, d'un côté sur la patte prolongeant la bague du montage articulé, et de l'autre côté sur une cale d'épaisseur. En pratique industrielle, chaque cale peut être fondue d'une seule pièce avec l'une des mâchoires de la pince correspondante.

Enfin, la figure 7 se réfère également à une forme particulière de mise en oeuvre de l'invention, dans une version de l'installation à deux convoyeurs bi-câbles, pour illustrer les moyens de mise en tension des câbles préalablement à l'assemblage des bras pendulaires dont il a été question au début de la présente description. On voit sur cette figure qu'à chacun des convoyeurs 6L et 6R il est associé un plateau 82 qui est monté mobile par translation longitudinale sur deux longerons de la charpente fixe 64. Chaque plateau 82 entraîne avec lui deux platines latérales qui n'ont pas été représentées pour laisser apparaître qu'elles supportent entre elles les organes mobiles associés respectivement aux deux câbles du convoyeur correspondant. Ainsi en est-il, de chaque côté de chaque convoyeur, pour l'axe de rotation de la roue motrice 61 d'entraînement d'un câble située de ce côté, ainsi que pour l'ensemble motorisé de commande et de transmission associé 83. Les câbles 60 ayant été fermés sur leurs circuits en boucle respectifs, en passant autour des roues de renvoi 61, les plateaux 82 sont déplacées progressivement, pour allonger les circuits, au moyen de vérins motorisés 84, qui prennent appui sur une traverse 86 de la charpente fixe pour pousser par une tige télescopique et une barre transversale 85 sur le plateau 82 correspondant. Lorsque l'opération d'allongement est terminée, les pinces d'assemblage des pendules de suspension des charges sont mises en place. Avantageusement, les vérins restent sous pression pendant le fonctionnement de l'installation, et les plateaux 82 restent mobiles. Ils sont guidés dans leurs déplacements par des fourches munies de galets 89 qui enjambent une lame 87 de la charpente fixe formant coulisse.

Comme on l'a déjà indiqué, la figure 2 illustre l'invention dans un mode de réalisation particulier des circuits de convoyage où chaque caisse véhiculée doit non seulement être plongée dans une cuve 2, mais également y subir un traitement électrolytique. En pratique, la cuve 2 contenant un bain d'électrolyte 20 est reliée par des électrodes 35 à la borne positive 32 d'une source de courant 9, dont la borne négative 31 est supposée à la masse électrique T. Toute caisse 5 plongée dans la cuve est portée au potentiel de masse T par l'intermédiaire d'une liaison électrique qui s'effectue en passant par les bras de suspension 4. Ceux-ci sont fabriqués à cet effet en des matériaux métalliques présentant une bonne conductibilité électrique dans la masse. Un bon contact électrique est également assuré jusqu'à la caisse elle-même en passant par la luge 3.

Au niveau des manetons 30 en prise avec les crochets 42 des bras 4, le contact électrique nécessaire se trouve grandement facilité, et par le fait que la suspension des luges est du type à quatre bras indépendants, et par le fait que les moyens tracteurs sont constitués par des câbles tendus supportant le poids des caisses en traitement.

Le contact à la masse électrique est assuré, à l'extrémité supérieure des bras 4, sur un tronçon du circuit de convoyage qui court tout du long de la cuve 2, afin que toute partie de la caisse 5 plongeant dans le liquide soit portée au potentiel de masse. Le circuit de masse organisé à cet effet, conformément à la figure 2, comprend un rail électrique 33 courant parallèlement au circuit du câble sur son trajet aller, et chaque bras 4 est équipé à son extrémité supérieure d'un pantographe à ressort ou dispositif analogue poussant élastiquement sur un patin 34 pour le maintenir en contact électrique glissant avec le rail 33. Ce dispositif peut être complété par une tresse de liaison électrique entre le patin et le bras 4 lui-même. Par contre, les roues de guidage des câbles sont isolées électriquement pour éviter les fuites de courant vers les éléments de charpente, qui sont en général métalliques.

Conformément à une particularité de l'invention s'appliquant ici de manière avantageuse, bien que non limitative, on exploite la possibilité que les câbles ont de faire conducteur électrique pour se dispenser de certains des dispositifs à patin 41. Plus précisément, on prévoit de tels patins pour un bras 4 sur deux le long d'un câble 60. Il s'agira de préférence d'équiper ainsi le bras 4 qui vient le premier s'accrocher sur une luge 3. On s'assure alors d'un bon contact électrique entre chaque bras et le câble porteur correspondant, au niveau du dispositif d'assemblage articulé. La même qualité de contact électrique est assurée, non seulement pour le bras accroché à l'avant de la luge, qui est mis directement à la masse électrique par un dispositif à patin 34, mais aussi pour le bras se plaçant à l'arrière. Entre les deux la conduction électrique est assurée par le câble, réalisé conducteur à cet effet, si bien que le circuit de masse inclut le câble 60 pour son tronçon situé entre les deux bras venant en prise avec la même luge, l'un à l'avant l'autre à l'arrière. Les mêmes dispositions sont adoptées pour le circuit de masse électrique associé au second convoyeur, de l'autre côté de la ligne de convoyage.

Bien que l'on ait cherché ci-dessus à illustrer plusieurs formes de réalisation d'une installation suivant l'invention, il en ressort néanmoins que l'invention n'y est pas limitée et qu'elle s'étend aux diverses combinaisons techniquement opérantes des variantes qui ont été décrites, ainsi qu'à toute variante passant par le biais de moyens équivalents.

## Revendications

1. Installation de transport d'objets en série dans une chaîne de manutention,
dans laquelle lesdits objets sont véhiculés suspendus par des bras pendulaires (4) à deux convoyeurs symétriques (6L, 6R) qui parcourent l'installation sous la commande de moyens d'entraînement synchronisés pour prendre en charge lesdits objets dans un poste de chargement (7) et les transporter individuellement jusqu'à un poste de déchargement (8) en passant par au moins un poste de traitement desdits objets,
**caractérisée en ce que**, dans chaque convoyeur, lesdits bras pendulaires sont accrochés en des positions fixes réparties le long d'un câble (60) qui est mû par lesdits moyens d'entraînement tandis qu'il est maintenu tendu sur des roues de guidage (63) définissant un circuit de convoyage prédéterminé,
et **en ce que** les charges (3-5) ainsi suspendues par l'intermédiaire des bras pendulaires (4) entre deux convoyeurs sont exclusivement portées par lesdits câbles (60L, 60R.) entre leurs roues de guidage (63L, 63R), ledit câble constituant ainsi des moyens à la fois tracteurs et porteurs pour lesdits objets.

2. Installation suivant la revendication 1, **caractérisée en ce que** chacun desdits convoyeurs (6L, 6R) comporte deux câbles similaires, maintenus tendus parallèlement l'un à l'autre et entraînés en synchronisme le long dudit circuit de convoyage, et **en ce que** chacun desdits bras pendulaires est accroché aux deux câbles du convoyeur correspondant par un dispositif d'assemblage à axe d'articulation autorisant son pivotement dans le plan vertical du circuit de convoyage, les roues de guidage étant en chaque endroit du circuit de convoyage, au moins dans sa portion active passant à travers le ou les postes de traitement desdits objets, écartées d'un intervalle laissant libre le passage desdits bras pendant verticalement entre elles.

3. Installation suivant la revendication 1 ou 2, comportant au moins un poste de traitement impliquant de plonger lesdits objets dans une cuve, **caractérisée en ce que** sur des tronçons de circuit en dénivellation correspondants, lesdits câbles sont libres de tout guidage de sorte que par effet de rappel élastique en torsion, la souplesse du câble contribue à l'équilibrage latéral des charges à leur passage dans la cuve.

4. Installation suivant l'une quelconque des revendications précédentes, **caractérisée en ce que**, pour un traitement en cuve par électrophorèse tel qu'il se pratique notamment dans les ateliers de peinture des usines de construction automobile, il est aménagé un circuit de masse électrique qui passe par le câble, celui-ci étant réalisé conducteur, notamment pour assurer la conduction électrique entre deux bras pendulaires portant un même objet au passage dans une cuve de traitement électrolytique.

5. Installation suivant l'une quelconque des revendications précédentes, **caractérisée en ce que** lesdits moyens d'entraînement des câbles comportent des roues motrices (61, 61L, 61R) situées à l'une des extrémités d'un circuit en boucle fermée décrit par le câble, et avantageusement situées pour agir en traction du câble au niveau du poste de déchargement.

6. Installation suivant l'une quelconque des revendications 1 à 5, **caractérisée en ce que** lesdits objets sont véhiculés suspendus aux câbles des deux convoyeurs par quatre bras indépendants (4), et **en ce que** dans chacun desdits convoyeurs (6L, 6R), le ou les câbles (60) décrivent des circuits en boucle fermée comportant une portion de retour des bras qui y sont accrochés du poste de déchargement au poste de chargement qui se situe latéralement dans l'installation par rapport à un trajet aller se situant dans sa partie médiane suivant la ligne de convoyage des objets en cours de traitement.

7. Installation suivant l'une quelconque des revendications 1 à 5, **caractérisée en ce que** dans chacun desdits convoyeurs (6L, 6R), le ou les câbles (60) décrivent des circuits en boucle fermée parallèles qui sont entièrement contenus chacun dans un même plan vertical.

8. Installation suivant la revendication 7, **caractérisée en ce que** lesdits objets sont véhiculés suspendus aux câbles des deux convoyeurs par quatre bras indépendants (4), et **en ce que** dans chacun desdits convoyeurs (6L, 6R), lesdits bras pendulaires (4) sont accrochés au câble (60) ou aux câbles (60aL, 60bL ou 60aR, 60bR) dont ils relèvent par un dispositif d'assemblage (43-45) à un seul degré de liberté autorisant leur pivotement dans ledit plan vertical dudit circuit.

9. Installation suivant l'une quelconque des revendications précédentes, **caractérisée en ce que** chaque convoyeur étant de type bi-câble conformément à la revendication 2, lesdits deux câbles (60aL, 60bL ou 60aR, 60bR) qu'il comporte sont couplés par l'intermédiaire desdits bras pendulaires (4), ceux-ci étant équipés à leur extrémité supérieure d'un dispositif d'assemblage à deux pinces (45a et 45b) venant en prise respectivement sur les deux câbles de part et d'autre d'une bague d'articulation autorisant leur pivotement dans ledit plan vertical dudit circuit.

10. Installation suivant l'une quelconque des revendications précédentes dans laquelle lesdits bras pendulaires (4) sont assemblés au câble correspondant (60) de manière à pouvoir pivoter autour d'un axe d'articulation perpendiculaire au plan vertical du câble, **caractérisée en ce que**, sur un trajet de retour ramenant lesdits bras pendulaires du poste de déchargement au poste de chargement, il est prévu des moyens (40) pour rabattre les bras circulant à vide dans une position de repli où ils sont inclinés vers le câble.

11. Installation suivant l'une quelconque des revendications précédentes, pour le transport de caisses d'automobiles reposant sur des luges, **caractérisée en ce que** l'extrémité inférieure des bras pendulaires forme un crochet (42) pour la prise en charge d'une luge parvenant au poste de chargement qui en est libérée au poste de déchargement.

12. Installation suivant la revendication 1, pour le transport de caisses d'automobiles reposant sur des luges véhiculées suspendues par quatre bras pendulaires indépendants (4), dont respectivement deux relevant de chacun desdits convoyeurs (6L, 6R), dans laquelle lesdits convoyeurs entraînent lesdits bras respectivement suivant deux circuits en boucle fermée parallèles qui sont entièrement contenus chacun dans un même plan vertical et dans laquelle chacun desdits convoyeurs (6L, 6R) comporte deux câbles similaires, maintenus tendus parallèlement l'un à l'autre sur des roues de guidage respectives, auxquels chacun desdits bras pendulaires est accroché pendant à la verticale entre leurs circuits respectifs par un dispositif d'assemblage comportant un axe d'articulation autorisant le pivotement du bras dans le plan vertical de son circuit et deux pinces symétriques serrées en position fixe respectivement sur chacun des deux câbles qui sont ainsi couplés.

13. Installation suivant l'une quelconque des revendications précédentes, dans laquelle lesdits moyens d'entraînement assurent entre les câbles des deux convoyeurs un fonctionnement synchronisé de manière à conserver une relation de position prédéterminée entre lesdits bras pendulaires (4) relevant de chacun desdits deux convoyeurs, par asservissement de vitesse, et éventuellement de position.

## Claims

1. An installation for sequentially transporting objects in a treatment line facility,
in which said objects are transported while suspended by pendle arms (4) from two symmetrical conveyors (6L, 6R) which travel through the installation under the control of synchronized driving means to pick up said objects in a loading station (7) and transport them individually to an unloading station (8) while passing by at least one station for the treatment of said objects,
wherein, in each conveyor, said pendle arms are secured in fixed positions distributed along a cable (60) which is moved by said driving means while being kept tensioned on guide wheels (63) defining a predetermined conveying circuit,
and wherein the loads (3-5) thus suspended via the pendle arms (4) are carried exclusively by said cables (60L, 60R) between their guide wheels (63L, 63R), said cable thus forming both traction motive and carrier means for said objects.

2. The installation as claimed in claim 1, wherein each of said conveyors (6L, 6R) comprises two similar cables, kept tensioned parallel to one another and driven in synchronism along said conveyor circuit, and in that each of said pendle arms is secured to the two cables of the corresponding conveyor by an assembly device with an articulation pin allowing it to pivot in the vertical plane of the conveyor circuit, the guide wheels being in each location of the conveyor circuit, at least in its active portion passing through the station or stations for the treatment of said objects, spaced by an interval leaving free the passage of said arms hanging vertically between them.

3. The installation as claimed in claim 1 or 2, comprising at least one treatment station involving dipping said objects in a tank,
wherein on corresponding inclined sections of circuit, said cables are free of all guidance, and due to the effect of torsional elasticity, the flexibility of the cable contributes thereby to the lateral balancing of the loads on their passage in the tank.

4. The installation as claimed in any one of the preceding claims wherein, for an electrophoresis treatment in a tank as is practiced in particular in paint facilities in car manufacturing plants, an electric ground circuit is arranged which passes through the cable, the latter being produced as a conductor, particularly to provide electrical conduction between two pendle arms carrying one and the same object on passing into an electrolytic treatment tank.

5. The installation as claimed in any one of the preceding claims, wherein said cable driving means comprise motive wheels (61, 61L, 61R) situated at one of the ends of a closed loop circuit followed by the cable, and advantageously situated to act in tracting the cable at the unloading station.

6. The installation as claimed in any one of claims 1 to 5, wherein said objects are transported while being suspended from the cables of the two conveyors by four independent arms (4), and wherein in each of said conveyors (6L, 6R), the cable or cables (60) describe closed loop circuits comprising a backward portion for returning the pendle arms attached to it from the unloading station to the loading station which is situated laterally in the installation aside a forward travel path situated in its mid-portion along the line for conveying the objects being treated.

7. The installation as claimed in any one of claims 1 to 5, wherein, in each of said conveyors (6L, 6R), the cable or cables (60) describe parallel closed loop circuits which are each entirely contained in one same vertical plane.

8. The installation as claimed in claim 7, wherein said objects are conveyed suspended from the cables of the two conveyors by four independent arms (4) and in each of said conveyors (6L, 6R) said pendle arms (4) are attached to the respective cable (60) or cables (60aL, 60bL or 60aR, 60bR) by an assembly device (43-45) with a single degree of freedom authorizing them to pivot in said vertical plane of said circuit.

9. The installation as claimed in any one of the preceding claims, whrein each conveyor being of the dual-cable type according to claim 2, said two cables (60aL, 60bL or 60aR, 60bR) comprised in it are coupled by means of said pendle arms (4), the latter being fitted at their top end with an assembly device with two grips (45a and 45b) clamped respectively onto the two cables on either side of an articulation race allowing them to pivot in said vertical plane of said circuit.

10. The installation as claimed in any one of the preceding claims wherein said pendle arms (4) are assembled to the corresponding cable (60) so as to be able to pivot about an articulation shaft or pin perpendicular to the vertical plane of the cable, and wherein, on a return backward path bringing back said pendle arms from the unloading station to the loading station, means (40) are provided for tilting the arms circulating empty into a tilted position in which they are tilted toward the cable.

11. The installation as claimed in any one of the preceding claims, for the transport of car bodies resting on sleds, wherein the bottom end of the pendle arms forms a hook (42) for picking up a sled arriving at the loading station which is released therefrom at the unloading station.

12. The installation as claimed in claim 1, for the transport of car bodies resting on sleds conveyed suspended by four independent pendle arms (4), two of which respectively relating to each of said conveyors (6L, 6R), in which said conveyors drive said arms respectively along two parallel closed loop circuits which are each entirely contained in one and the same vertical plane and in which each of said conveyors (6L, 6R) comprises two similar cables, kept tensioned parallel to one another on respective guide wheels, to which each of said pendle arms is attached hanging vertically between their respective circuits by an assembly device comprising an articulation shaft or pin allowing the arm to pivot in the vertical plane of its circuit and two symmetrical grips clamped in fixed position respectively on each of the two cables which are thus coupled together.

13. The installation as claimed in any one of the preceding claims, in which said driving means provide between the cables of the two conveyors a synchronized operation so as to retain a predetermined positional relationship between said pendle arms (4) relating to each of said two conveyors, by speed and where appropriate positional slaving.

## Patentansprüche

1. Einrichtung zum Transport von Gegenständen in Serie auf einer Förderkette,
- in der die Gegenstände aufgehängt an Pendelarmen (4) mit zwei symmetrischen Förderern (6L, 6R) transportiert werden, welche die Einrichtung mit dem Antrieb von auf Gleichlauf gebrachten Zugmitteln durchlaufen, um die Gegenstände an einem Ladeplatz (7) zu übernehmen und sie einzeln zu einem Abladeplatz (8) zu transportieren, wobei sie mindestens einen Platz zur Bearbeitung der Gegenstände durchlaufen,
- **dadurch gekennzeichnet, dass** an jedem Förderer die Pendelarme an ortsfesten Stellen aufgehängt sind, die entlang einem Seil (60) verteilt sind, das durch die Zugmittel bewegt wird, während es straff auf Führungsrädern (63) gehalten wird, die einen vorher festgelegten Förderkreislauf bestimmen,
- und **dadurch**, dass die auf diese Weise mittels der Pendelarme (4) zwischen zwei Förderern aufgehängten Lasten (3-5) ausschließlich über die Seile (60L, 60R) zwischen ihren Führungsrädern (63L, 63R) getragen werden, wobei das Seil somit gleichzeitig Zug- und Tragmittel für die Gegenstände bildet.

2. Einrichtung gemäß Anspruch 1, **dadurch gekennzeichnet, dass** jeder der Förderer (6L, 6R) zwei vergleichbare Seile umfasst, die parallel zueinander straff gehalten und im Gleichlauf entlang des Förderkreislaufes angetrieben werden, und **dadurch**, dass jeder der Pendelarme an den beiden Seilen des entsprechenden Förderers mit einer Befestigungsvorrichtung mit Schwenkachse aufgehängt ist, die sein Schwenken in senkrechter Ebene des Förderkreislaufes erlaubt, wobei sich die Führungsräder an jeder Stelle des Förderkreislaufes befinden, mindestens in seinem aktiven Teil, der durch den bzw. die Platz/Plätze zur Bearbeitung der Gegenstände verläuft, und die Führungsräder sich in einem Abstand zueinander befinden, der den Durchgang der senkrecht zwischen ihnen hängenden Arme frei lässt.

3. Einrichtung gemäß Anspruch 1 oder 2, umfassend mindestens einen Platz zur Bearbeitung, einschließlich zum Eintauchen der Gegenstände in eine Wanne, **dadurch gekennzeichnet, dass** auf den entsprechenden Abschnitten des Kreislaufes mit Absenkung die Seile ohne jede Führung sind, sodass die Biegsamkeit des Seils durch torsionselastische Rückstellung zum seitlichen Ausgleich der Lasten bei ihrem Durchlaufen der Wanne beiträgt.

4. Einrichtung gemäß einem der vorstehenden Ansprüche, **dadurch gekennzeichnet, dass** für eine Bearbeitung in der Wanne durch Elektrophorese, wie man sie besonders in den Lackierereien von Fabriken des Automobilbaus praktiziert, ein elektrischer Massekreis eingerichtet wird, der durch das Seil verläuft, welches leitend ausgeführt ist, besonders um die elektrische Leitung zwischen zwei Pendelarmen sicherzustellen, die einen selben Gegenstand beim Durchlaufen in einer Wanne zur elektrolytischen Behandlung tragen.

5. Einrichtung gemäß einem der vorstehenden Ansprüche, **dadurch gekennzeichnet, dass** die Zugmittel der Seile Antriebsräder umfassen (61, 61L, 61R), die an einem der Enden eines Kreislaufes mit einer vom Seil beschriebenen geschlossenen Schleife liegen und vorteilhaft positioniert sind, um das Ziehen des Seils auf gleicher Höhe mit dem Abladeplatz zu bewirken.

6. Einrichtung gemäß einem der vorstehenden Ansprüche 1 bis 5, **dadurch gekennzeichnet, dass** die Gegenstände mit den Seilen der beiden Förderer an vier unabhängigen Armen (4) aufgehängt transportiert werden, und **dadurch**, dass an jedem der Förderer (6L, 6R) das bzw. die Seil(e) (60) Kreisläufe mit geschlossener Schleife beschreiben, die einen Teil des Rückwegs der Arme umfassen, die dort vom Abladeplatz zum Ladeplatz aufgehängt sind, wobei der Ladeplatz seitlich im Vergleich zu einem Hinweg in der Anlage liegt, welcher sich in dem mittleren Teil der Anlage entlang der Förderlinie der in Bearbeitung befindlichen Gegenstände befindet.

7. Einrichtung gemäß einem der Ansprüche 1 bis 5, **dadurch gekennzeichnet, dass** an jedem der Förderer (6L, 6R) das bzw. die Seil(e) (60) parallele Kreisläufe mit geschlossener Schleife beschreiben, die jeweils vollständig in einer senkrechten Ebene enthalten sind.

8. Einrichtung gemäß Anspruch 7, **dadurch gekennzeichnet, dass** die Gegenstände mit den Seilen der beiden Förderer an vier unabhängigen Armen (4) aufgehängt transportiert werden, und **dadurch**, dass an jedem der Förderer (6L, 6R) die Pendelarme (4) an dem Seil (60) oder an den Seilen (60aL, 60bL bzw. 60aR, 60bR) aufgehängt sind, von denen sie mit einer Befestigungsvorrichtung (43-45) mit einem einzigen Freiheitsgrad abhängen, der ihnen ihr Schwenken in der senkrechten Ebene des Kreislaufes erlaubt.

9. Einrichtung gemäß einem der vorstehenden Ansprüche, **dadurch gekennzeichnet, dass** jeder Förderer gemäß Anspruch 2 vom zweiseiligen Typ ist, wobei die beiden Seile (60aL, 60bL bzw. 60aR, 60bR), die er umfasst, mittels der Pendelarme (4) gekoppelt sind, welche an ihrem oberen Ende mit einer Befestigungsvorrichtung mit zwei Klemmen (45a und 45b) ausgestattet sind, die jeweils zu beiden Seiten eines Drehringes auf den beiden Seilen in Eingriff kommen, der ihr Schwenken in der senkrechten Ebene des Kreislaufes erlaubt.

10. Einrichtung gemäß einem der vorstehenden Ansprüche, in der die Pendelarme (4) derart mit dem entsprechenden Seil (60) verbunden sind, dass sie um eine rechtwinklig zur senkrechten Ebene des Seils liegende Schwenkachse schwenken können, **dadurch gekennzeichnet, dass** auf einem Rückweg, bei dem die Pendelarme vom Abladeplatz zum Ladeplatz gebracht werden, Mittel (40) vorgesehen sind, um die leer umlaufenden Arme in eine Klappstellung umzuklappen, in der sie schräg zum Seil stehen.

11. Einrichtung gemäß einem der vorstehenden Ansprüche zum Transport von auf Schlitten aufliegenden Automobilkarosserien, **dadurch gekennzeichnet, dass** das untere Ende der Pendelarme einen Haken (42) zur Übernahme eines den Ladeplatz erreichenden Schlittens bildet, wobei der Schlitten am Abladeplatz von dem Haken befreit wird.

12. Einrichtung gemäß Anspruch 1 zum Transport von auf Schlitten aufliegenden Automobilkarosserien, die an vier unabhängigen Pendelarmen (4) aufgehängt transportiert werden, davon jeweils zwei abhängig von jedem der Förderer (6L, 6R), in der die Förderer die Arme jeweils nach zwei parallelen Kreisläufen mit geschlossener Schleife antreiben, die jeweils vollständig in einer selben senkrechten Ebene enthalten sind, und in der jeder der Förderer (6L, 6R) zwei vergleichbare Seile umfasst, die parallel zueinander straff auf jeweiligen Führungsrädern gehalten werden, an denen jeder der Pendelarme senkrecht hängend zwischen ihren jeweiligen Kreisläufen mit einer Befestigungsvorrichtung aufgehängt ist, die eine Schwenkachse, die das Schwenken des Armes in der senkrechten Ebene seines Kreislaufes erlaubt, sowie zwei symmetrische Klemmen umfasst, die in ortsfester Stellung jeweils auf jedes der beiden Seile geklemmt sind, wodurch diese somit gekoppelt werden.

13. Einrichtung gemäß einem der vorstehenden Ansprüche, in der die Zugmittel derart einen auf Gleichlauf gebrachten Betrieb zwischen den Seilen der beiden Förderer sicherstellen, dass durch Geschwindigkeits- sowie möglicherweise Nachlaufsteuerung ein vorher festgelegtes und von jedem der beiden Förderer abhängiges Positionsverhältnis zwischen den Pendelarmen (4) beibehalten wird.
